# EUROPEAN PATENT SPECIFICATION

(11) **EP 0 702 800 B1**
(45) Date of publication and mention of the grant of the patent: **07.01.1998**
(21) Application number: 94917119.3
(22) Date of filing: 09.06.1994
(51) Int. Cl.: G01V 8/00, G08B 13/183

(54) **DETECTOR SYSTEMS**
DETEKTOR SYSTEM
SYSTEMES DETECTEURS

(30) Priority: 09.06.1993 GB 9311933
(43) Date of publication of application: 27.03.1996
(73) Proprietor: INTELSEC SYSTEMS LIMITED, Hitchin, Hertfordshire SG4 0TP (GB)
(72) Inventor: LATTA, David William, Knebworth, Hertfordshire SG3 6BG (GB)
(74) Representative: Britter, Keith Palmer
(86) International application number: GB9401247
(87) International publication number: WO9429755

(56) References cited:
- EP-A- 0 522 478
- FR-A- 2 512 213
- US-A- 4 267 443
- US-A- 4 794 248

## Description

This invention relates to detector systems and concerns, in particular but not exclusively, such systems which may be useful in detecting the presence of an intruder gaining or attempting to gain access to a secure area.

For many reasons, it may be that an area - a building, perhaps, or some land - needs to be kept secure in the sense either that no unauthorised persons can enter it or that, if they do, their presence is detected so that some appropriate action can be taken. Such an area may typically form a compound, a fence of some sort defining the area within which there are articles and buildings to which only certain persons are permitted access.

It is evident that keeping an area secure will, for the most part, involve detecting the presence of an intruder within that area, and especially of determining an intruder's passage into the area, so that action can be taken before the intruder implements his purpose. Much effort has been expended in devising detector systems which will note and warn about an intruder crossing the perimeter or boundary of a secure area. Such systems range from the simplest, for example, trip wires just above the ground surface, through to the more complex, for example, a multiplicity of pressure pads just below the ground, and on to the extremely sophisticated, such as, a vertical array of horizontal parallel laser beams extending between spaced posts to form a "wall" of laser radiation, with each system having its advantages and disadvantages. Indeed, even the most complex of present-day laser barriers can be triggered by something as unintruder-like as an animal or a wind-borne plastic bag, without the system operator being able to determine by what, or even where, the perimeter of the secure area has been breached.

The present invention seeks to solve this problem by providing a "light"-beam-based, preferably an infra-red (IR) laser-based, detection system which enables the nature, such as, the shape and position of an "intruder" to be assessed more positively and with greater accuracy. It proposes that there be used a matrix of beams crossing each other, to form a net-like pattern of beams, and that information about which beams are broken when blocked by an intruding body be supplied to an analyser which determines therefrom, to a suitable approximation both the general shape and the position of the body which has interrupted the beam pattern.

In US-A-4267443 (Carroll et al) there is disclosed, in general terms, apparatus for detecting and assessing the nature and position of an object passing through, and thus interrupting, one or more beams. This prior art apparatus generally comprises means for generating a matrix of beams intersecting each other, to form a net-like pattern of beams, means for generating information relating to any beam(s) interrupted by an object and an analyser arranged to be supplied with such information from said information-generating means and to determine from such information the general nature and position of the object which has interrupted the beam(s).

A major disadvantage associated with this known prior art apparatus is that it can only determine from the information relating to the beams interrupted by an object, the nature of the object in very general terms. For example, the nature of an object of generally circular cross-section is determined as a square, whilst that of an irregular object, such as a human being, is determined as a rectangle. Thus, this know apparatus cannot discriminate between objects of, say, generally the same size but of different shapes.

The inventive system is, however, characterised from that prior art apparatus, in that the analyser is arranged to use the beam interrupted information to construct an area of space which is bounded by the interrupted beams within which an intruding object lies, and whose shape and size define, to a suitable approximation, the shape and size of the object far more precisely than that of which the prior art apparatus of US-A-4267443 is capable.

The analyser may be arranged to carry out its analysis of the generated information relating to any interrupted beam(s) in seal time, to construct a set of side-by-side sections which, when combined together, define a general volumetric shape of the intruding object. The net-like pattern of beams may be sufficiently fine to provide an area of space which approximates to a vertical section through the intruding object.

The detection system of the invention is preferably an electromagnetic, such as, a light, beam-based detection system, that is to say, it is a system which uses beams of electromagnetic radiation extending from one or more transmitter thereof to one or more receiver thereof. The beam may, in principle, be of any suitable electromagnetic radiation but, in practice, it is most preferably light of a frequency which is invisible to the human eye, more specifically infra-red (IR). Moreover, while the source of radiation might be any transmitting device capable of providing a sufficiently narrow and focused beam, most conveniently it is a laser beam which is not necessarily coherent, although that might have certain advantages.

Other beams, such as, ultrasonic beams, may also be used as an alternative to beams of electromagnetic radiation.

In the system of the invention there is used a matrix of beams actually crossing each other, to form a net-like pattern of beams. The fineness or coarseness of the net pattern may be whatever is appropriate to the size of object most likely to intersect the beams and be detected. If only large objects, such as vehicles, are to be detected, then the apertures in the net pattern may be quite large, say, several metres long and a metre or so high, but if relatively small objects, such as cats and dogs, must be seen and detected then the net apertures should be quite small, say, around 0.25 m long and 0.1 m high. For a human-sized object, a suitable aperture size is about 0.5 m long and 0.25 m high.

A matrix of beams can be constructed in a number of ways but one preferred way is to provide a vertically-spaced array of alternate transmitters and receivers, such as, a multiplicity of laser transmitters and receivers alternately spaced up a vertical post. Typically, six alternately located transmitters and receivers spaced roughly equally up a 2 m high post located, perhaps by 100 m or so, from a corresponding array of transmitters and receivers with each transmitter arranged to direct its beam at several, possibly each, of the receivers, either all at the same time or one after another. In this way, beams from a top transmitter of the post might extend horizontally to a top receiver of an adjacent post, the second receiver down, the next receiver down and so on, to form a fan-like set of beams, while beams from each of the other transmitters also form a similar fan as they are directed to the respective sets of receivers. Thus, all these sets of beams intersect each other, to form the desired net-like pattern in which the apertures formed thereby are roughly diamond-shaped.

When the system of the invention is in use, information about which beams are interrupted when blocked by an intruding object, is supplied to an analyser which uses that information to determine the general nature and shape of what has interrupted the beams and where. Basically, the information required is little more than which beam is interrupted, and this will be quite easy if, for every beam, there is a single transmitter and receiver pair used for that beam only. However, it will normally be convenient to arrange for one or more transmitters to output several beams each and/or perhaps for one or more receivers to receive several beams. To obtain the required information about which beams are interrupted, it may be necessary to code carefully each beam, so that when it is not received by the relevant receiver, it is possible to determine exactly which transmitter/receiver pair it extended between. Thus, it might be possible to code each beam by modulating it, which is comparatively easy to do with laser beams, or, and if some form of time-based scanning arrangement is used, by knowing for which time period each beam was transmitted.

The information about which beams are interrupted is supplied to an analyser which determines therefrom, to a suitable approximation, the general nature, such as, the shape and the position of the beam-interrupted object. While it could be a purpose-built hardware device, in general this analyser is in effect a software system, being a suitable program running on a computer, typically one of those modern desk-top devices known as a micro-computer.

The analyser uses the data about which beams are interrupted, coupled with the fact that on this scale light travels in straight lines, to construct an area of space bounded by the uninterrupted beams within which the intruder object must lie. If the net is fine enough, then this area of space will approximate quite well to a vertical section through the object itself. Moreover, if the analysis can be carried out in real time, that is, fast in comparison to the time taken for the object to pass through the beam matrix, then there will be constructed a set of side-by-side sections which will, when combined together, define the general volumetric shape of the object.

In use, the analyser hardware associated with each pair of transmitter/receiver arrays is desirably at some central point, to which all information outputted by the pair is sent for action. Preferably, however, each post has at least the "interrupted beam identification" hardware located at the post, possibly as part thereof, and it is the data outputted therefrom, which is transmitted to a central control point for further action.

Although the algorithm employed by the analyser to determine each vertical section is in practice quite complex, the basic principle underlying it is simple, and is roughly as follows:-
1) From stored data indicating the lines making up the detector "wall" along which the beams are directed to establish the matrix, there is determined the region in the matrix in which there are the most beam interruptions.
2) Working outwardly from the centre of this region, there is identified the first uninterrupted beam and the line it represents is traversed until it intersects that of another uninterrupted beam.
3) The line of the latter is similarly traversed to yet another uninterrupted beam line and so on until the first uninterrupted beam line intersection is re-encountered, whereupon the system has found all the uninterrupted beam lines immediately surrounding the object and the resulting shape "defines" the object's section and position.
4) All interrupted beam lines are tested to ascertain if they pass through the determined shape and if some do not, indicating a second object, then for these beams the analysis is repeated.
5) As the object passes through the matrix, so that its ascertained sectional shape changes with time, the several side-by-side shapes are combined, with appropriate spatial separation, to provide a volumetric definition of the object.
6) Both after Step 4 and Step 5 the derived shapes can be tested against a library of shapes in an attempt to determine with greater certainty what the object might be.

The detection system of the invention provides a greatly enhanced security system relatively free of false/nuisance alarms and capable of providing reliable information as to the general nature and position of an intruder. It is of particular value when used as part of a long range security system, such as that found at a country's border or at the perimeter of a large installation, such as, an industrial plant or a military base.

Embodiments of the invention will now be described by way of illustration only and with reference to the accompanying drawings in which:
Figure 1 is a perspective view of a perimeter fence constituted by a laser beam matrix of a detector system according to the invention;
Figure 2 is an elevation of a fence similar to that of Figure 1 but simpler;
Figures 3A to 3E show a sequence of displays representing the various stages in the analysis of the output of a slightly simplified detector system as shown in Figure 2;
Figure 4 is a view of a possible output of the system of Figures 1 and 2 in real time;
Figure 5 is a diagrammatic representation of a typical arrangement of security fence posts of a detector system;
Figures 6A and 6B are respective side and front elevations, on an enlarged scale, and partially cut away, of one post of the posts shown in Figure 5;
Figure 7 illustrates how simple pulse-width-coded amplitude and/or frequency modulated, transmitted beams combine at a receiver of the system;
Figures 8A and 8B are respective block diagrams of circuits for transmitter and receiver circuits operating with amplitude modulated beam pulses; and
Figures 9A and 9B represent a flow chart diagram of a corresponding software algorithm for processing the signals only from the beam receivers of the system.

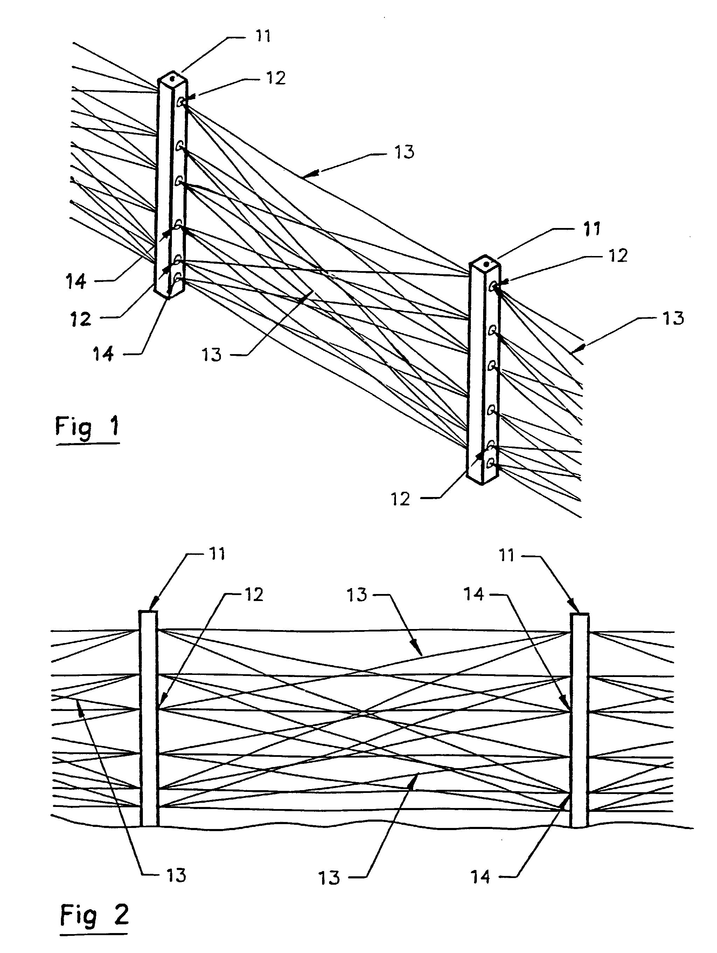

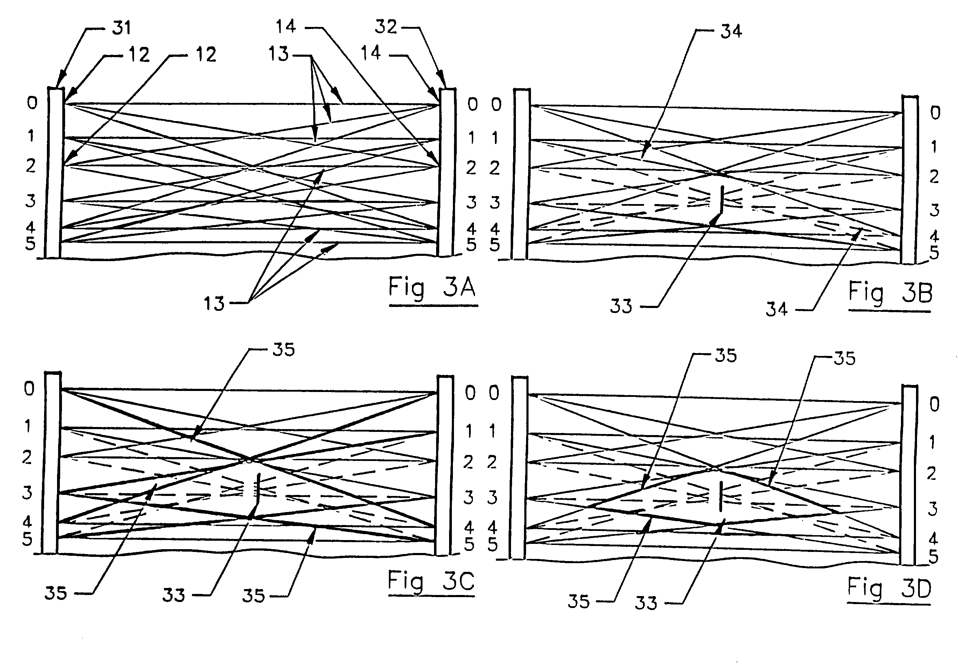

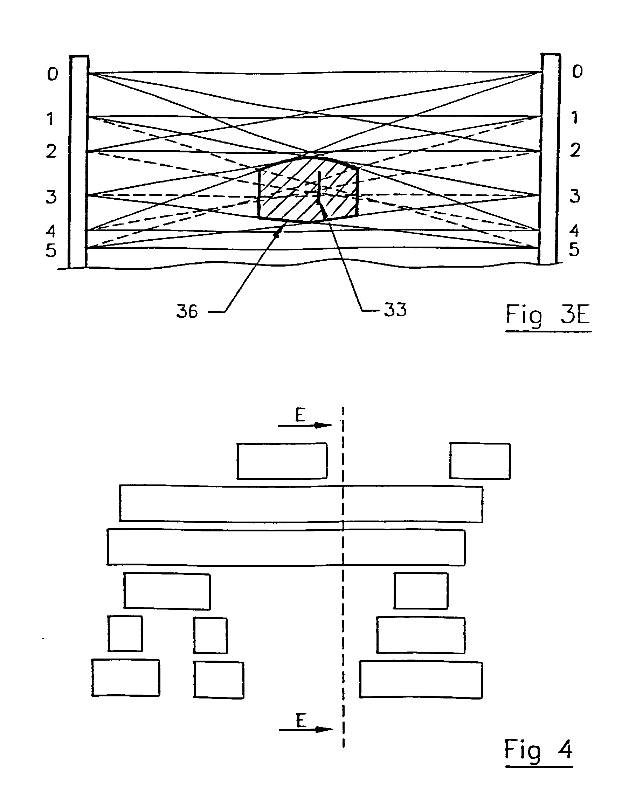

A detector system, as shown in Figure 1, comprises a fence consisting of a multiplicity of posts 11 (only two are shown) which surround an area to be kept secure. Each post 11 carries on its side adjacent one of its neighbouring posts a spaced linear array of a multiplicity of alternate laser transmitters 12 and receivers 14. Each transmitter 12 directs a laser beam 13 on to the receivers 14 on the adjacent posts 11. In Figure 1 each transmitter 12 is shown emitting a laser beam 13 on to each of the receivers, whereas in Figures 2 and 3 the laser means 13 are directed on to only some of the receivers 14. The laser transmitters/receivers 12, 14 are closer together in the region of ground level than nearer the tops of the posts 11, in order to optimise detection of low-level intruding objects, such as, a crawling person or a person offering the smallest profile to the plane of the fence, namely, by a rolling action.

It will be seen that the criss-crossing beams 13 provide a matrix or network, having comparatively small apertures therein. It would be difficult, if not impossible, for any object of the same general size as that of the apertures to pass through the matrix without breaking one or more of the beams, even if positioned very carefully.

The laser transmitters 12 and receivers 14 are supplied by a power arrangement (not shown) and beam coding means (also not shown) and the receivers pass their output to a beam analyser (also not shown).

Figure 2 shows a simpler arrangement of posts 11, transmitters 12 and receivers 14 but, otherwise, much the same as that of Figure 1.

The sequence of Figures 3A to 3E represents the various stages in the analysis of the output of a slightly more simplified detector system light beam arrangement. There is shown in each case two posts 31, 32, one carrying a spaced linear array of six transmitters 12 numbered 0 to 5 and the other carrying a corresponding array of detectors 14, these making a matrix of criss-crossing, intersecting beams 13. For clarity all these are only referenced in Figure 3A. In this sequence transmitter 0 directs beams on to receivers 0, 2 and 4, while transmitters 1 to 5 direct beams respectively on to receivers 1, 3 and 5; 0, 2 and 4; 1, 3 and 5; 0, 2 and 4; and 1, 3 and 5.

Figure 3A shows the full complement of uninterrupted beams 13. Figure 3B, however, shows an opaque object depicted by the line 33, placed in the matrix so as to interrupt some of the beams, the interrupted beams 34 being shown as dashed lines. There are, however, a number of uninterrupted beams, and those 35 closest to the area around the object 33 have been emboldened in Figure 3C and in Figure 3D, there being shown only those parts of those lines 35 which directly surround the object 33.

It will be clear that the space in Figure 3D defined by the closest beams 35 must "define" the furthest possible boundaries of the sectional shape of the object 33. Moreover, by applying pattern matching techniques it can be guessed that the most likely actual sectional shape for the object 33 is in fact the smaller area 36 shown hatched in Figure 3E.

Imagining that the object 33 is in fact something which is actually passing through the beam matrix, either into or out of the plane of the paper, and taking a number of similar "readings" from the receiver output as this passage occurs, there can be constructed a view of the object as a whole. Such a possible view is shown in Figure 4, which reveals that the object was a camel and that the view of Figure 3E corresponds to the section on the line E-E in Figure 4.

The analysis of the interrupted beam receiver information is effected as follows:-
1) The matrix of intersecting beams is scanned to discover the region containing the greatest number of intersecting beam interruptions. This region is known as the Primary Intruder Outline (PIO).
2) The "centre" of this region is then calculated. One of the interrupted beams is then scanned from this "centre" outwardly until an intersection with an uninterrupted beam is encountered. This first uninterrupted beam is then scanned until it crosses a second uninterrupted beam. This intersection is stored as the first point of the PIO.
3) The second uninterrupted beam is then scanned until it encounters a third uninterrupted beam and this intersection is stored as the second point of the PIO. For the purposes of calculation, the laser posts themselves are considered to be uninterrupted beams. Also two uninterrupted horizontal beams are assumed to exist, one above the topmost actual beam and one below the lowest actual beam.
4) This process is continued until the first point is encountered again. The complete outline of the shape within which the intruder exists can then be plotted on a screen. The direction of scan of an uninterrupted beam is determined by the equation of the beam and the co-ordinates of the "centre".
5) Examination of all uninterrupted beams is then performed to ascertain whether any interrupted beams exist which do not pass through the PIO. If any are found, the above procedure is repeated to determine the Secondary Intruder Outline.
6) Once the PIO has been determined, further examination of intersections of the interrupted beams within this outline are made to calculate the most probable Primary Intruder Position and Shape. The Secondary, Tertiary, etc, Intruder Outlines are similarly processed if applicable.
7) Analysis of the sequence of Intruder Outlines enhances position calculations and provides low resolution front and side profiles of any intruder.

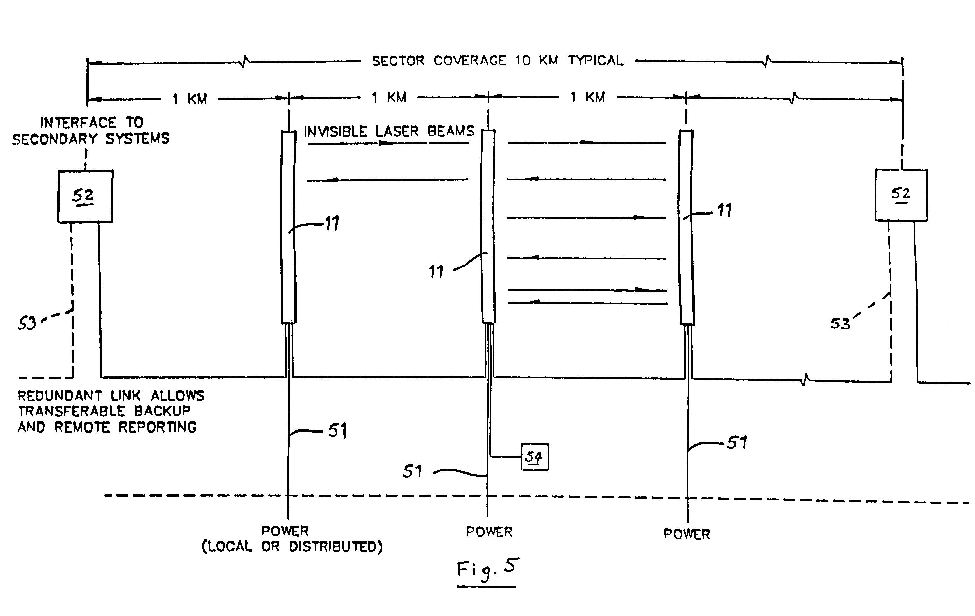

Referring now to Figure 5 of the drawings, there is shown a diagrammatic representation of a typical arrangement of security fence posts for the inventive detector system, which covers, say, a fence sector of ten kilometres in length. In this particular embodiment, only three fence posts 11 are shown.

Each post 11 includes control electronics, power converter and battery back-up and a communications link (not shown) for the associated laser transmitters and receivers. Local or distributed power is provided for those electronic components and circuitry via supply lines 51.

Respective control processors for the laser fence configuration of Figure 5 provide an interface to secondary systems, together with a redundant link 53 for each sector, which allows transferal back-up and remote reporting. A portable test instrument is shown at 54 for periodic testing of the electronic components and circuitry of each fence post 11.

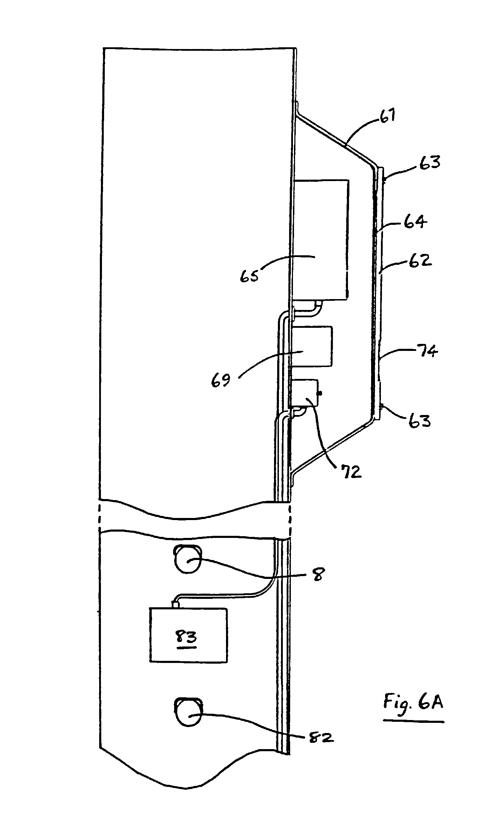

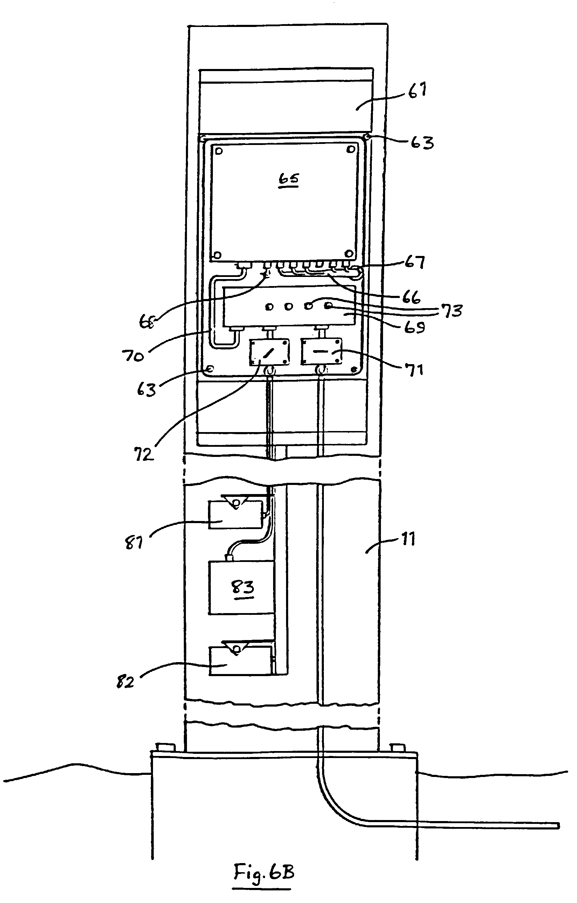

In respective Figures 6A and 6B, partial front and side views of a portion of each fence post 11 are shown.

Each post 11 includes in the interior thereof, an environmental housing 61 with an access panel 62 secured thereto by captive fasteners 63. An environmental seal 64 is also provided for the cover 62.

Also accommodated in the environmental housing 61 is the control unit an associated circuitry at 65, together with an associated wiring loom 66 and associated cable glands 67, 68. A power supply controller 69 is connected to the electronic control unit 65 via suitable cabling 70. Respective AC and DC key switch isolators 71 and 72 are also provided, with associated cabling and cable glands. The power supply controller 69 has a series of power supply status lamps 73 which can be viewed externally through a clear panel 74 in the removable access cover 62.

A pair of vertically spaced laser transmitter and receiver 81, 82 are located above and below a low maintenance battery arrangement 83. Power/data cables 84 connect the battery assembly 83 and the transmitter 81 and receiver 82 to the control unit 65 via the DC isolator 72, the power supply controller 69 and the interconnecting cable 70.

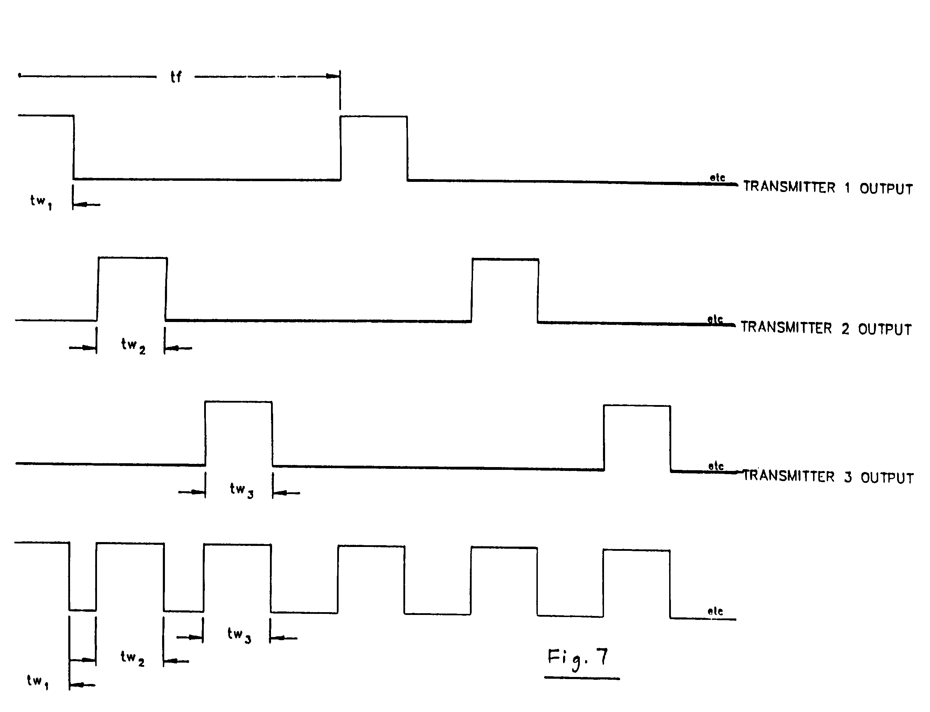

Figure 7 shows how simple pulse width coded amplitude and/or frequency modulated, transmitted laser signals combine at a receiver as a pulse frame. It is the repetition rate of these frames which is chosen to detect the fastest moving anticipated intruder by the presence or absence of one or more coded laser pulses. The signal from each transmitter 12 (Figures 1 and 2), 81 (Figures 6A and 6B) may be a sequence of smaller duration pulses whose time relationship describe a data value similar to the way in which data is transmitted serially between associated computers of the system. Hence, the lasers may be used for data communication purposes by using the system as a multiplexed data channel, the absence of individual timed data elements providing the beam interruption information.

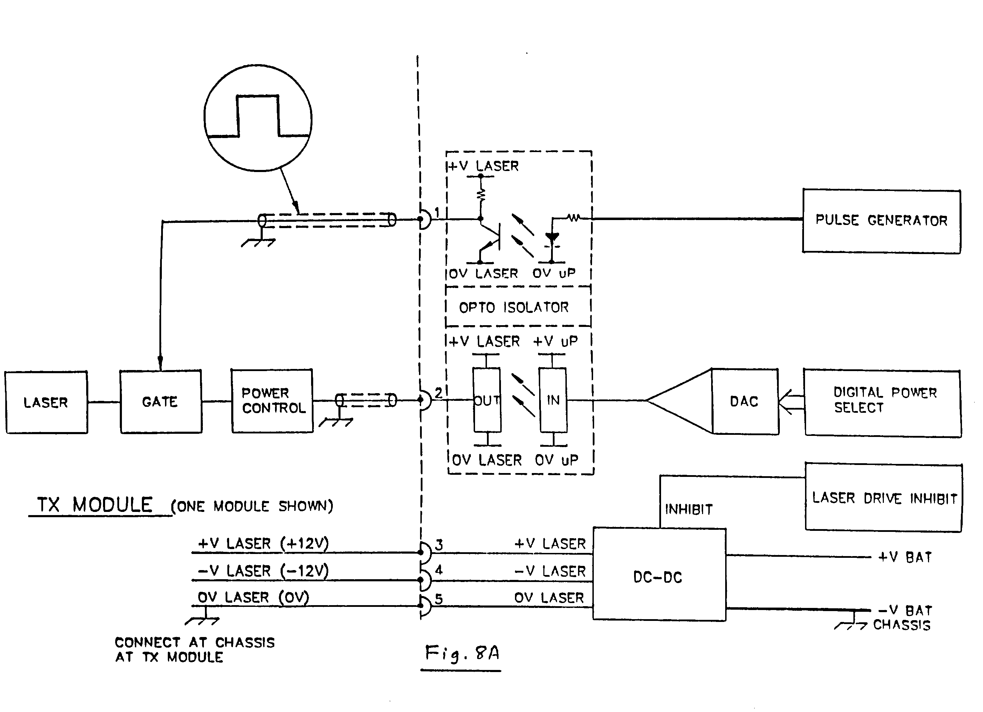

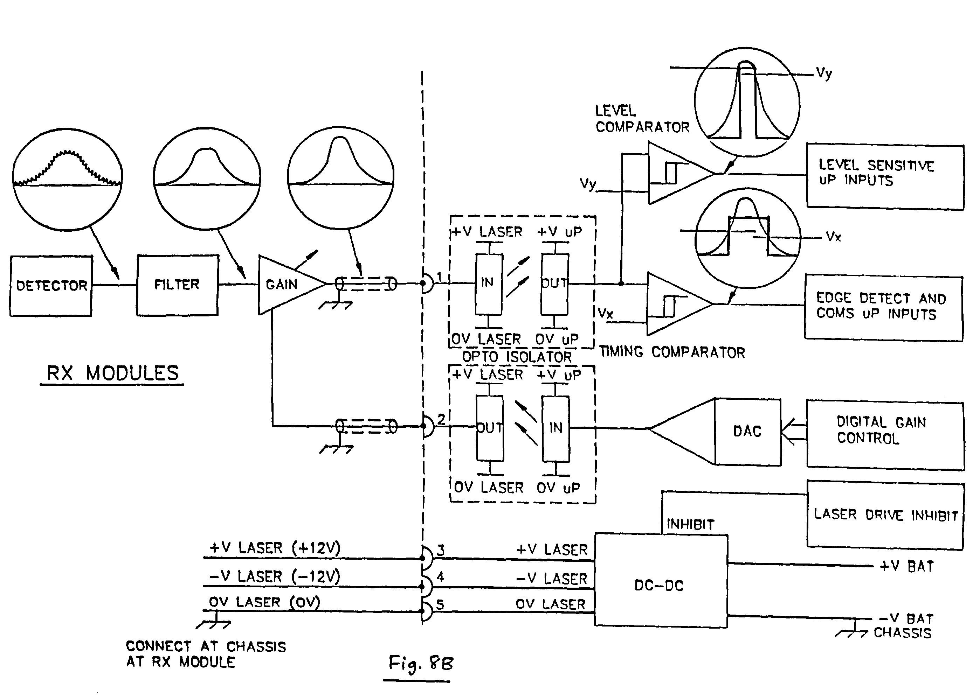

Figures 8A and 8B show respective laser transmitter and receiver block circuit diagrams for amplitude modulated pulses, such as those shown in Figure 7. Provision is included in the transmitter circuit of Figure 8A for the control of the output power in order that the system can compensate for varying environmental conditions of operation. In this particular embodiment, the receiver circuit includes provision for gain control in order that the system can compensate for varying environmental conditions and to maximise the signal-to-noise ratio. The combination of gain and power controls with signal level comparators forms a successive approximation, analogue-to-digital converter for signal level detection and correction. In this simplified arrangement, a comparator with hysteresis is used to provide clean signal edges for pulse width measurement. Additional provision for the control of power supplies an opto-isolated interfaces between system modules is designed such that the relevant safety requirements can be met.

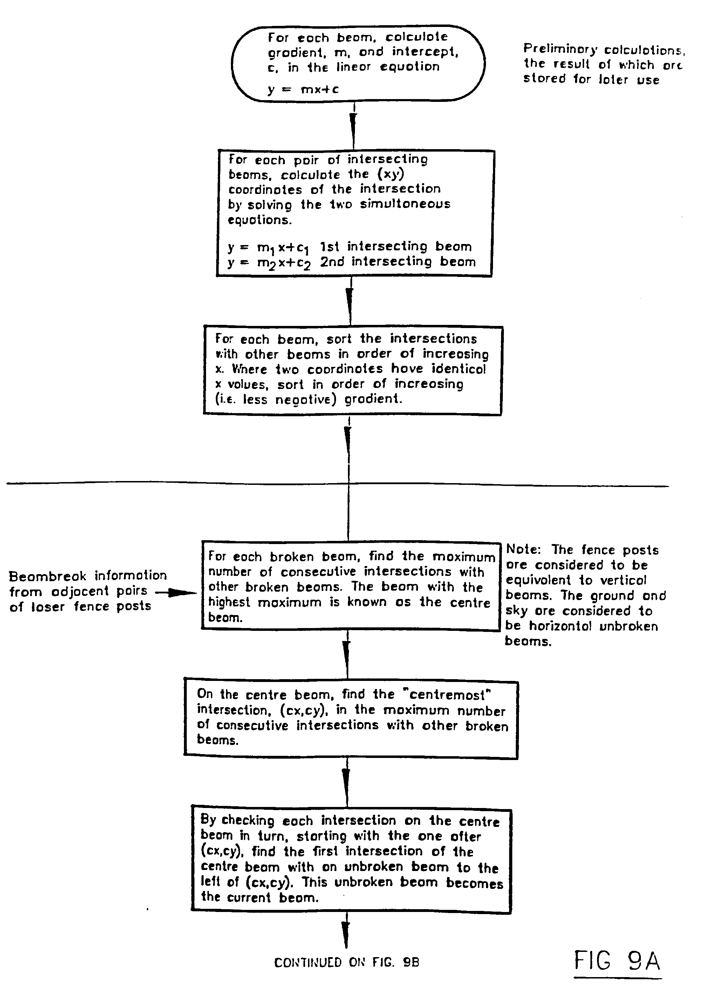

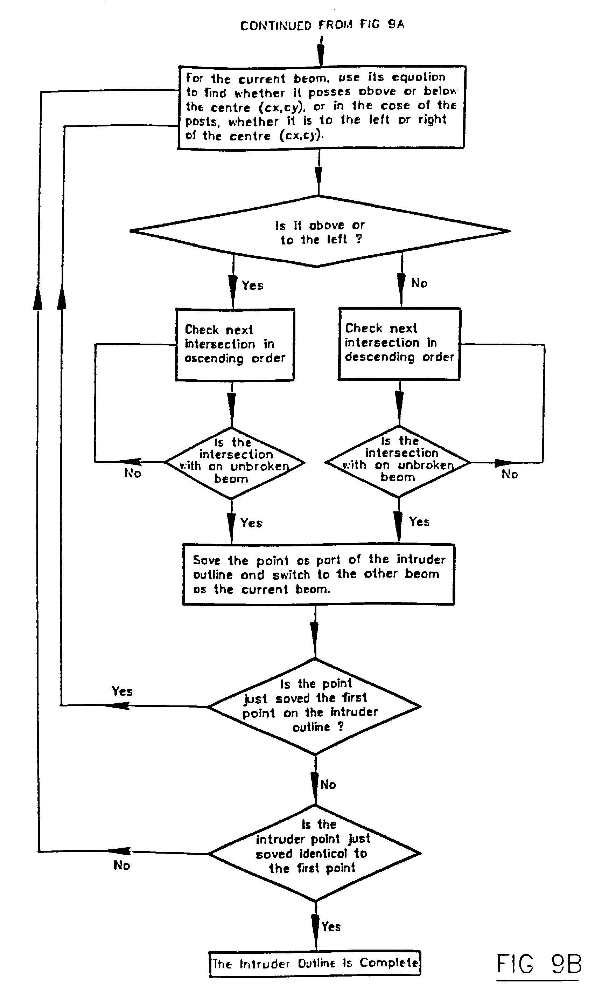

Generally, beam interruption information is communicated to a controlling micro computer for the system which processes received information from adjacent posts 11, enunciates, if necessary, the alarm and, after implementing the software algorithm shown in flow diagram form in Figures 9A and 9B, displays the results in graphical form to assist the operator in determining the nature and/or size of the intruder, as described previously above.

## Claims

1. A system for detecting and assessing the nature and position of an object (33) passing through, and thus interrupting, one or more beams (13), which system comprises means (12) arranged to generate a matrix of beams (13) intersecting each other, to form a net-like pattern of beams (13), means arranged to generate information relating to any beam(s) (34) interrupted by an intruding object (33) and an analyser (Figs 9A, 9B) arranged to be supplied with such information from said information-generating means and to determine from such information the general nature and position of an object (33) which has interrupted the beam(s) (34),
characterised in that the analyser is arranged to use the information to construct an area (36) of space which is bounded by the uninterrupted beams (35) within which the intruding object (33) lies, and whose shape and size define, to a suitable approximation, the shape and size of the object (33).

2. A system according to claim 1, wherein the analyser is arranged to carry out its analysis of the generated information relating to any interrupted beam(s) (34) in real time, to construct a set of side-by-side sections which, when combined together, define a general volumetric shape of the intruding object (33).

3. A system according to claim 1 or 2, wherein the net-like pattern is sufficiently fine to provide an area (36) of space which approximates to a vertical section through the intruding object (33).

4. A system according to any preceding claim, which is an electromagnetic beam-based detection system.

5. A system according to any preceding claim wherein the or each beam (13) is a light beam of a frequency invisible to the human eye.

6. A system according to any preceding claim, wherein the or each beam (13) is a laser beam.

7. A system according to claim 1, 2 or 3, wherein the or each beam (13) is an ultrasonic beam.

8. A system according to any preceding claim, wherein the or each beam (13) extends from a transmitter (12) to a receiver (14) thereof.

9. A system according to any preceding claim, wherein the net-like pattern generated by the or each beam (13) is of a fineness or coarseness appropriate to the size of the object (33) most likely to intersect the beam(s) (13) and be detected.

10. A system according to any preceding claim, wherein the matrix of beams (13) is generated by a vertically-spaced array of alternate transmitters (12) and receivers (14).

11. A system according to claim 10, wherein the transmitters (12) and receivers (14) are spaced alternately up a post (31) located from a corresponding array of transmitters (12) and receivers (14), with each transmitter (12) arranged to direct its beam (13) at several of the receivers (14) of the corresponding array either at the same time or one after another.

12. A system according to claim 11, wherein each transmitter (12) is arranged to direct its beam (13) at each of the receivers (14) of the corresponding array, to form a fan-like set of beams (13), such that all sets of beams (13) intersect each other to form the net-like pattern in which the apertures formed thereby are roughly diamond-shaped.

13. A system according to any preceding claim, wherein one or more transmitters (12) is or are arranged to output several beams (13) and/or one or more receivers (14) are arranged to receive several beams (13).

14. A system according to any preceding claim, wherein each beam (13) is coded, so that when a beam (13) is not received by the relevant receiver (14), it is possible to determined exactly between which transmitter/receiver pair (12, 14) it extended.

15. A system according to claim 14, wherein each beam (13) is coded by modulating it.

16. A system according to any preceding claim, wherein information about which beams (34) are interrupted, is supplied to the analyser which determines therefrom, to a suitable approximation, the general nature of the beam-interrupting object (33).

17. A system according to any preceding claim, wherein the analyser comprises a software system.

18. A system according to any preceding claim, wherein the analyser comprises hardware which is associated with each of a plurality of pairs of beam transmitter/receiver (12, 14) arrays and is located at a central point to which all information outputted by the pair is sent for processing.

19. A system according to any of claims 1 to 17, wherein the analyser comprises hardware which is associated with each of a plurality of pairs of beam transmitter/receiver (12, 14) arrays and wherein at least the hardware for identifying interrupted beams (34) is located remote from a central control point, the information outputted from the interrupted beam identification hardware being transmissible to the central control point.

20. A system according to any preceding claim, wherein the analyser is arranged to determine vertical sections of interrupted beams (34) of the net-like pattern of beams using an algorithm.

## Patentansprüche

1. System zum Erfassen und Beurteilen der Art und Lage eines Objekts (33), das einen oder mehrere Strahl(en) passiert und dadurch unterbricht, welches System Mittel (12) aufweist, die zum Erzeugen einer Matrix von Strahlen (13) angeordnet sind, welche einander schneiden, um ein netzartiges Muster von Strahlen (13) zu bilden, ferner Mittel zum Erzeugen von Information bezüglich eines oder mehrerer durch ein eindringendes Objekt (33) unterbrocher Strahlen (34), und einen Analysator (Fig. 9A, 9B), dem diese Information von den informationserzeugenden Mitteln zuführbar ist, um aus dieser Information die generelle Art und Lage eines Objekts (33) zu bestimmen, welches den oder die Strahl(en) (34) unterbrochen hat, dadurch gekennzeichnet, daß der Analysator so ausgebildet ist, daß er die Information verwendet, um ein Raumgebiet (36) zu konstruieren,
welches von den nichtunterbrochenen Strahlen (35) berandet ist,
innerhalb dessen das eindringende Objekt (33) liegt,
und dessen Form und Größe, in geeigneter Näherung, die Form und Größe des Objekts (33) definieren.

2. System nach Anspruch 1, bei welchem der Analysator so angeordnet ist, daß er seine Analyse der erzeugten Information bezüglich eines oder mehrerer unterbrochener Strahlen (34) in Echtzeit ausführt, um eine Menge von Seite-an-Seite-Schnitten zu konstruieren, welche, miteinander kombiniert, eine allgemeine volumetrische Form des eindringenden Objekts (33) definieren.

3. System nach Anspruch 1 oder 2, bei welchem das netzartige Muster genügend fein ist, um ein Raumgebiet (36) vorzusehen, welches angenähert einem Vertikalschnitt durch das eindringende Objekt (33) entspricht.

4. System nach einem der vorhergehenden Ansprüche, welches ein auf elektromagnetischen Strahlen beruhendes Erfassungssystem ist.

5. System nach einem der vorhergehenden Ansprüche, bei welchem der oder jeder Strahl (13) ein Lichtstrahl mit einer Frequenz ist, welche für das menschliche Auge nicht sichtbar ist.

6. System nach einem der vorhergehenden Ansprüche, bei welchem der oder jeder Strahl (13) ein Laserstrahl ist.

7. System nach Anspruch 1, 2 oder 3, bei welchem der oder jeder Strahl (13) ein Ultraschallstrahl ist.

8. System nach einem der vorhergehenden Ansprüche, bei welchem der oder jeder Strahl (13) sich von einem Sender (12) zu einem Empfänger (14) für diesen Strahl erstreckt.

9. System nach einem der vorhergehenden Ansprüche, bei welchem das netzartige Muster, welches durch den oder jeden Strahl (13) erzeugt wird, eine Feinheit oder Grobheit aufweist, welche geeignet ist für die Größe des Objekts (33), welches am wahrscheinlichsten den oder die Strahl(en) (13) schneidet und zu erfassen ist.

10. System nach einem der vorhergehenden Ansprüche, bei welchem die Matrix (13) von Strahlen durch eine vertikal beabstandete Anordnung von abwechselnden Sendern (12) und Empfängern (14) erzeugt wird.

11. System nach Anspruch 10, bei welchem die Sender (12) und Empfänger (14) abwechselnd mit Abständen an einem Pfosten (31) hinauf angeordnet sind, welcher im Abstand von einer korrespondierenden Anordnung von Sendern (12) und Empfängern (14) angeordnet ist, wobei ein Sender (12) jeweils so angeordnet ist, daß er seinen Strahl (13) auf mehrere der Empfänger (14) der korrespondierenden Anordnung entweder gleichzeitig, oder nacheinander, richtet.

12. System nach Anspruch 11, bei welchem ein Sender (12) jeweils so angeordnet ist, daß er seinen Strahl (13) auf jeden der Empfänger (14) der korrespondierenden Anordnung richtet, um eine fächerartige Menge von Strahlen (13) zu bilden, so daß alle Mengen von Strahlen (13) einander schneiden, um das netzartige Muster zu bilden, bei welchem die hierdurch gebildeten Öffnungen etwa rautenförmig ausgebildet sind.

13. System nach einem der vorhergehenden Ansprüche, bei welchem einer oder mehrere Sender (12) so angeordnet ist bzw. sind, daß sie mehrere Strahlen (13) abgeben, und/oder einer oder mehrere Empfänger (14) so angeordnet ist bzw. sind, daß sie mehrere Strahlen (13) empfangen.

14. System nach einem der vorhergehenden Ansprüche, bei welchem jeder Strahl (13) codiert ist, so daß, wenn ein Strahl (13) nicht vom zuständigen Empfänger (14) empfangen wird, es möglich ist, exakt zu bestimmen, zwischen welchem Sender/Empfänger-Paar (12, 14) er sich erstreckt hat.

15. System nach Anspruch 14, bei welchem jeder Strahl (13) durch Modulieren codiert ist.

16. System nach einem der vorhergehenden Ansprüche, bei welchem Information darüber, welche Strahlen (14) unterbrochen sind, dem Analysator zugeführt wird, welcher daraus, in geeigneter Näherung, die generelle Art des strahlenunterbrechenden Objekts (33) bestimmt.

17. System nach einem der vorhergehenden Ansprüche, bei welchem der Analysator ein Softwaresystem aufweist.

18. System nach einem der vorhergehenden Ansprüche, bei welchem der Analysator Hardware aufweist, welche jeweils einem aus einer Mehrzahl von Paaren von Strahlensender/-empfänger (12, 14)-Anordnungen zugeordnet ist und an einer zentralen Stelle angeordnet ist, zu der alle von dem Paar abgegebene Information zur Verarbeitung gesandt wird.

19. System nach einem oder mehreren der Ansprüche 1 bis 17, bei welchem der Analysator Hardware aufweist, welche jedem aus einer Mehrzahl von Paaren von Strahlen-Sender/-Empfänger (12, 14)-Anordnungen zugeordnet ist, und wobei mindestens die Hardware zum Identifizieren unterbrochener Strahlen (34) entfernt von einer zentralen Kontrollstelle angeordnet ist, und die von der Hardware zur Identifikation unterbrochener Strahlen abgegebene Information zur zentralen Kontrollstelle übertragbar ist.

20. System nach einem der vorhergehenden Ansprüche, bei welchem der Analysator so ausgebildet ist, daß er Vertikalschnitte der unterbrochenen Strahlen (34) des netzartigen Strahlenmusters unter Verwendung eines Algorithmus bestimmt.

## Revendications

1. Système destiné à détecter et évaluer la nature et la position d'un objet qui traverse et, ainsi, interrompt un ou plusieurs rayons (13), ce système comprenant un moyen (12) prévu pour engendrer une matrice de rayons (13) qui se coupent les uns les autres pour former un motif du type filet de rayons (13), un moyen pour engendrer des informations concernant un ou des rayons quelconques (34) interrompus par un objet intrus (33), et un analyseur (Figs. 9A, 9B) prévu pour être alimenté avec ces informations provenant dudit moyen générateur d'informations et pour déterminer à partir de ces informations la nature générale et la position de l'objet (33) qui a interrompu le ou les rayons (34),
caractérisé en ce que l'analyseur est prévu pour utiliser les informations pour construire une surface (36) de l'espace qui est limité par les rayons interrompus (35) dans laquelle se trouve l'objet intrus (33) et dont la forme et la dimension définissent, avec une approximation convenable, la forme et la dimension de l'objet (33).

2. Système suivant la revendication 1, dans lequel l'analyseur est prévu pour réaliser son analyse des informations engendrées concernant le ou des rayons quelconques (34) en temps réel, pour construire un jeu de sections juxtaposées qui, quand on les combine, définissent une forme générale volumétrique de l'objet intrus (33).

3. Système suivant la revendication 1 ou 2, dans lequel le motif du type filet est suffisamment fin pour donner une surface (36) de l'espace qui approche une section verticale de l'objet intrus.

4. Système suivant l'une quelconque des revendications précédentes, qui est un système de détection basse sur des rayons électromagnétiques.

5. Système suivant l'une quelconque des revendications précédentes, dans lequel le ou chaque rayon (13) est un rayon lumineux d'une fréquence invisible à l'oeil humain.

6. Système suivant l'une quelconque des revendications précédentes, dans lequel le ou chaque rayon (13) est un rayon laser.

7. Système suivant la revendication 1, 2 ou 3, dans lequel le ou chaque rayon (13) est un rayon ultrasonique.

8. Système suivant l'une quelconque des revendications précédentes, dans lequel le ou chaque rayon (13) va d'un émetteur (12) à son récepteur (14).

9. Système suivant l'une quelconque des revendications précédentes, dans lequel le motif du type filet engendré par le ou chaque rayon (13) est, d'une manière fine ou grossière, approprié à la dimension de l'objet (33) qui, le plus vraisemblablement, va couper le ou les rayons (13) et être détecté.

10. Système suivant l'une quelconque des revendications précédentes, dans lequel la matrice des rayons (13) est engendrée par un réseau espacé verticalement d'émetteurs (12) et de récepteurs (14) alternés.

11. Système suivant la revendication 10, dans lequel les émetteurs (12) et les récepteurs (14) sont espacés alternativement sur un poteau (31) placé à distance d'un réseau correspondant d'émetteurs (12) et de récepteurs (14), chaque émetteur (12) prévu pour diriger son rayon (13) vers plusieurs des récepteurs du réseau correspondant soit simultanément, soit l'un après l'autre.

12. Système suivant la revendication 11, dans lequel chaque émetteur (12) est prévu pour diriger son rayon (13) sur chacun des récepteurs (14) du réseau correspondant et former un jeu du type éventail de rayons (13), de manière que tous les jeux de rayons se coupent pour former le motif du type filet dans lequel les ouvertures formées ainsi ont en gros une forme de losange.

13. Système suivant l'une quelconque des revendications précédentes, dans lequel un ou plusieurs émetteurs (12) sont prévus pour donner plusieurs rayons (13) et/ou un ou plusieurs récepteurs (14) sont prévus pour recevoir plusieurs rayons (13).

14. Système suivant l'une quelconque des revendications précédentes, dans lequel chaque rayon (13) est codé de manière que, quand un rayon (13) n'est pas reçu par le récepteur concerné (14), il soit possible de déterminer exactement entre quelle paire émetteur/récepteur (12, 14) il existait.

15. Système suivant la revendication 1, dans lequel chaque rayon (13) est codé en le modulant.

16. Système suivant l'une quelconque des revendications précédentes, dans lequel les informations concernant les rayons (34) qui sont interrompus sont envoyées à l'analyseur qui en déduit, avec une approximation convenable, la nature générale de l'objet (33) qui a interrompu les rayons.

17. Système suivant l'une quelconque des revendications précédentes, dans lequel l'analyseur comprend un système de logiciel.

18. Système suivant l'une quelconque des revendications précédentes, dans lequel l'analyseur comprend un matériel qui est associé à chacune d'une pluralité de paires de réseaux d'émetteurs/récepteurs (12, 14) de rayons et est situé au point central auquel sont envoyées toutes les informations venant de la paire pour traitement.

19. Système suivant l'une quelconque des revendications 1 à 17, dans lequel l'analyseur comprend un matériel qui est associé à chacune d'une pluralité de paires de réseaux d'émetteurs/récepteurs '12, 13) de rayons et dans lequel au moins le matériel qui identifie les rayons interrompus (34) est situé loin du point de contrôle central, les informations provenant du matériel d'identification des rayons interrompus pouvant être transmises au point de contrôle central.

20. Système suivant l'une quelconque des revendications précédentes, dans lequel l'analyseur est prévu pour déterminer des coupes verticales des rayons interrompus (34) du motif du type filet de rayons en utilisant un algorithme.
